# EUROPEAN PATENT APPLICATION

(11) **EP 4 332 158 A1**
(43) Date of publication of application: **06.03.2024**
(21) Application number: 22824508.0
(22) Date of filing: 14.02.2022
(51) Int. Cl.: C08J 11/12

(54) **MOVING BODY**

(30) Priority: 16.06.2021 JP 2021099890
(71) Applicant: Mitsubishi Heavy Industries, Ltd., Tokyo 100-8332 (JP)
(72) Inventor: KANEMASU, Masayuki, Tokyo 100-8332 (JP); NISHIGAKI, Makoto, Tokyo 100-8332 (JP); YOSHIYAMA, Ryuji, Tokyo 100-8332 (JP); MATSUMOTO, Shinji, Tokyo 100-8332 (JP); INOUE, Tomoaki, Tokyo 100-8332 (JP); HIRATA, Takehiko, Tokyo 100-8332 (JP); YUGE, Atsushi, Tokyo 100-8332 (JP)
(74) Representative: Studio Torta S.p.A.
(86) International application number: PCT/JP2022/005729
(87) International publication number: WO 2022/264508

(57) **Abstract**

Provided is a watercraft (1) including: a volume reduction processing part (20) configured to reduce the volume of a composite material (200) formed of a resin material containing a fiber base material; a body (2) in which the volume reduction processing part (20) is installed; and an internal combustion engine (3) configured to generate thrust for moving the body (2), and the volume reduction processing part (20) reduces the volume of the composite material (200) by heating the composite material (200) within a predetermined temperature range to thermally decompose the resin material.

## Description

### [Technical Field]

The present disclosure relates to a moving unit.

### [Background Art]

Conventionally, a known technique to reduce the volume of a composite material such as Fiber Reinforced Plastics (FRP) before discarding the same is to heat the composite material to a predetermined temperature that causes no alteration or deterioration of the thermosetting resin thereof, thereby reduce the hardness or rigidity, and then cut the composite material by using a cutting machine to reduce the volume (see Patent Literature 1, for example).

### [Citation List]

### [Patent Literature]

[PTL 1]
Japanese Patent No. 4122299

### [Summary of Invention]

### [Technical Problem]

In Patent Literature 1, however, since the composite material is cut and thereby reduced in volume, sufficient reduction in volume is not possible. To further reduce the volume of the cut composite materials, it is required to cut the cut composite materials into smaller pieces or further crush the cut composite materials, which will increase the cost of installing facilities used for such processing. Further, when the composite material is large, the cost of transporting the composite materials to the facilities will increase.

The present disclosure has been made in view of such circumstances and intends to provide a moving unit including a volume reduction processing part that can sufficiently reduce the volume of a composite material without increasing costs.

### [Solution to Problem]

The moving body according to the present disclosure comprises a volume reduction processing part for reducing a composite material formed of a resin material including a fiber base material, a box body in which the volume reduction processing part is installed, and a thrust generating part for generating thrust for moving the box body, wherein the volume reduction processing part reduces the volume of the composite material by heating the composite material in a predetermined temperature range to thermally decompose the resin material.

### [Advantageous Effects of Invention]

According to the present disclosure, it is possible to provide a moving unit including a volume reduction processing part that can sufficiently reduce the volume of a composite material without increasing costs.

### [Brief Description of Drawings]

[Fig. 1]

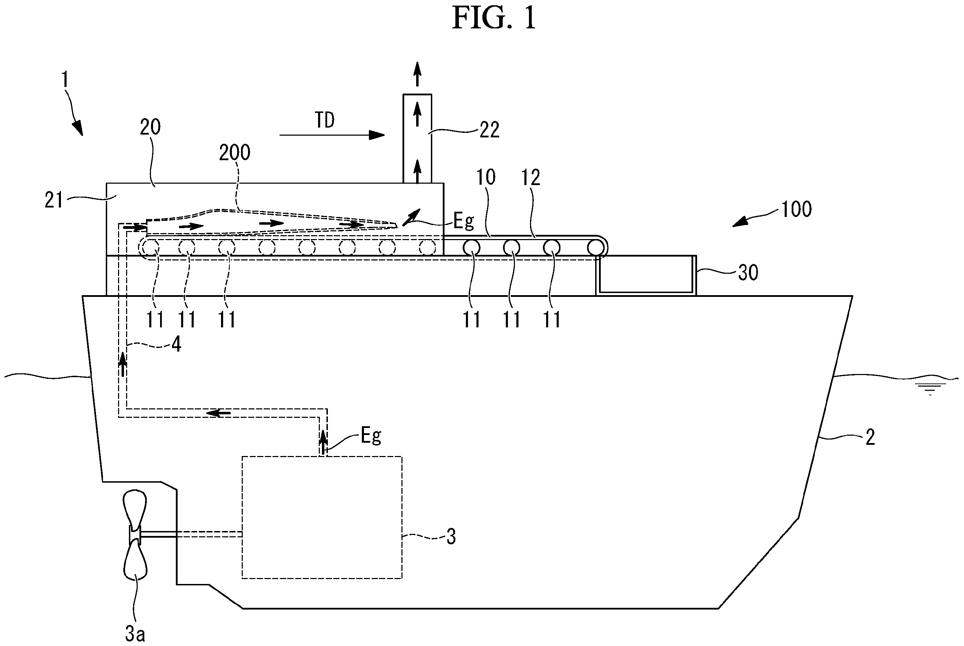

   Fig. 1 is a side view illustrating a watercraft according to a first embodiment of the present disclosure and illustrates a state where a composite material is under a thermal decomposition process.
[Fig. 2]

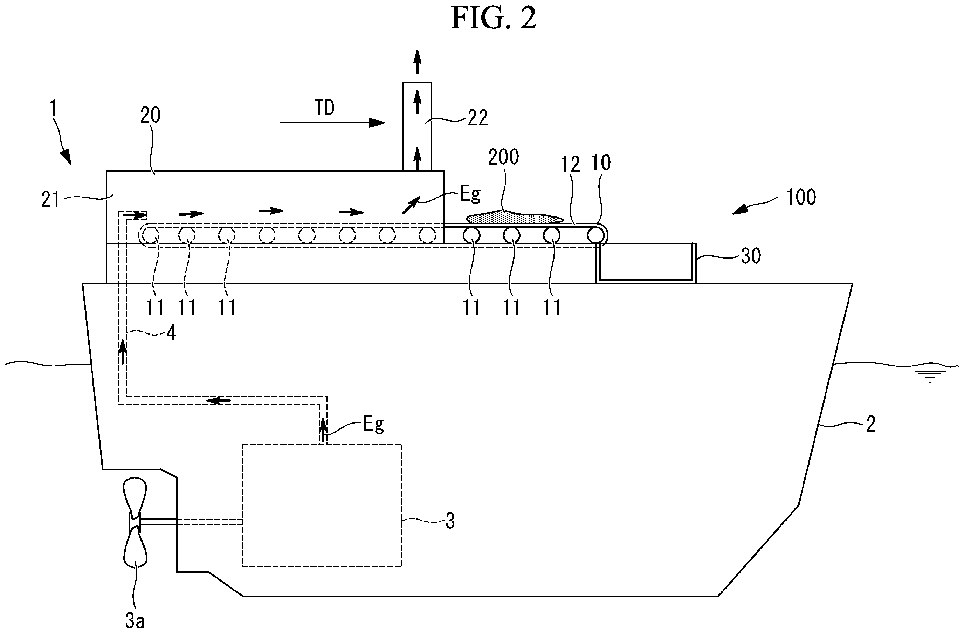

   Fig. 2 is a side view illustrating the watercraft according to the first embodiment of the present disclosure and illustrates a state where the composite material subjected to a thermal decomposition process is transported.
[Fig. 3]

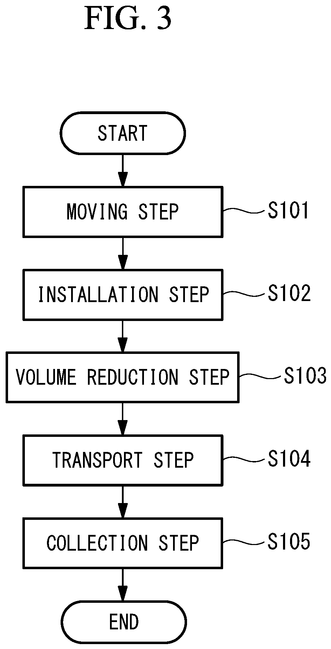

   Fig. 3 is a flowchart illustrating a composite material volume reduction method according to the first embodiment of the present disclosure.
[Fig. 4]

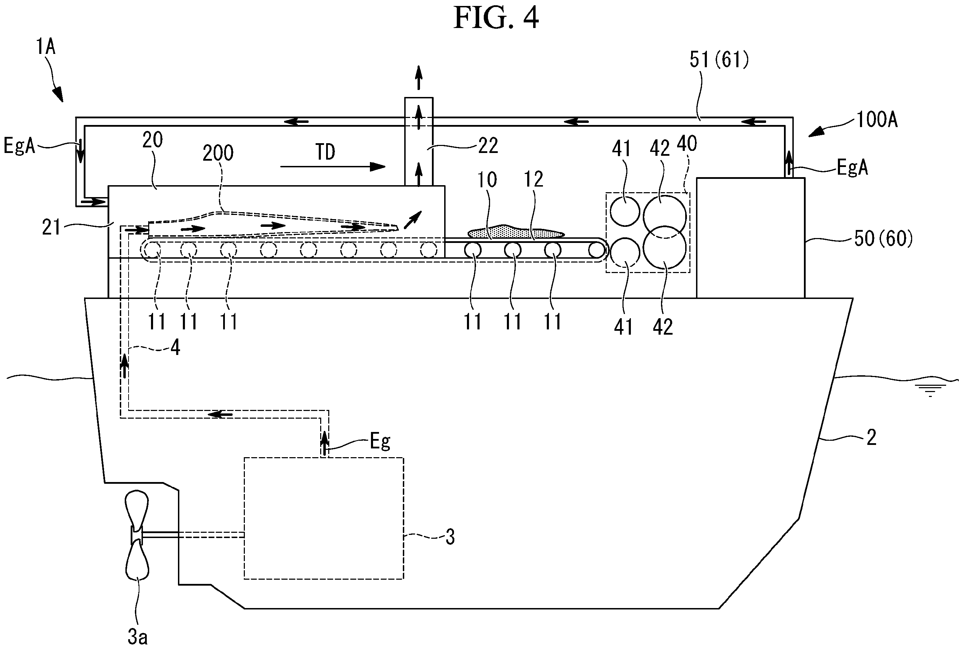

   Fig. 4 is a side view illustrating a watercraft according to a second embodiment of the present disclosure.
[Fig. 5]

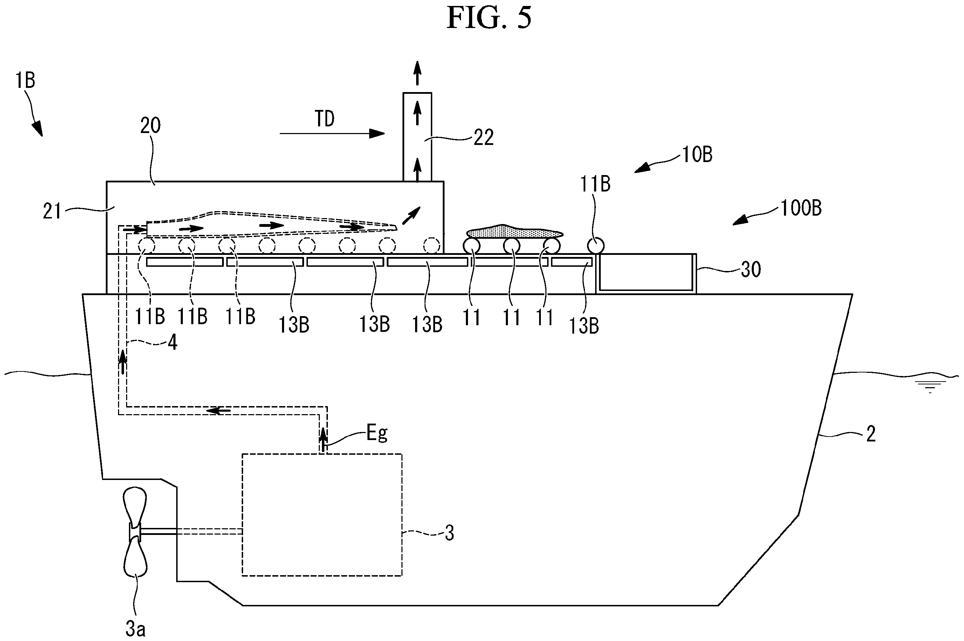

   Fig. 5 is a side view illustrating a watercraft according to a third embodiment of the present disclosure.

### [Description of Embodiments]

### [First Embodiment]

A watercraft 1 according to the first embodiment of the present disclosure will be described below with reference to the drawings. Fig. 1 and Fig. 2 are partial sectional views illustrating the watercraft (moving unit) 1 according to the first embodiment of the present disclosure. Fig. 1 illustrates a state where a composite material 200 is under a thermal decomposition process, and Fig. 2 illustrates a state where the composite material 200 subjected to the thermal decomposition process is transported.

As shown in FIG. 1, the ship 1 of the present embodiment includes a volume reduction processing device 100, a body 2 on which the volume reduction processing device 100 is installed, and an internal combustion engine (thrust generating device) 3 for generating thrust for moving the body 2. The internal combustion engine 3 rotates the screw 3a to obtain a thrust force for moving the main body 2.

The volume reduction processing apparatus 100 of the present embodiment is an apparatus for reducing the volume of the long composite material 200. The long composite material 200 is an airfoil member used in aircraft wings and renewable energy power generation, for example, wind turbines and tidal power generators. The composite material 200 is formed of a resin material including a fiber base material. The fiber base material is, for example, a member in which a sheet formed of a reinforcing fiber material such as carbon fiber or glass fiber is laminated over a plurality of layers. The fiber base material may be a prepreg previously impregnated or partially impregnated with a resin material, or a combination of the prepreg and the reinforcing fiber material.

The resin material is, for example, an epoxy resin; a thermosetting resin material such as unsaturated polyester, vinyl ester, phenol, cyanate ester, polyimide, or the like; or a thermoplastic resin such as polyether ether ketone (PEEK), polyethylene terephthalate (PET), polybutylene terephthalate (PBT), nylon 6 (PA6), nylon 66 (PA66), polyphenylene sulfide (PPS), polyetherimide (PEI), polyether ketone ketone (PEKK), or the like.

As illustrated in Fig. 1, the volume reduction processing device 100 includes a transport part 10, a volume reduction processing part 20, and a collection part 30.

The transport part 10 is a device that transports the composite material 200 subjected to a volume reduction process by the volume reduction processing part 20. As illustrated in Fig. 1, the transport part 10 has a plurality of transport rollers 11 and a belt 12 stretched around the plurality of transport rollers 11. The transport part 10 transmits drive force from the plurality of transport rollers 11 to the belt 12 and transports the composite material 200 subjected to a volume reduction process to the collection part 30 along the transport direction TD. Note that the transport part 10 may include no belt 12 and transport the composite material 200 subjected to the volume reduction process only by the transport rollers 11.

The volume reduction processing part 20 is a device that reduces the volume of the composite material 200 by heating the composite material 200 within a predetermined temperature range to thermally decompose a resin material contained in the composite material 200. Herein, the predetermined temperature range is greater than or equal to 300 degrees Celsius and less than or equal to 400 degrees Celsius (greater than or equal to 300 °C and less than or equal to 400 °C) and is a temperature range that is greater than or equal to the minimum temperature at which the resin material contained in the composite material 200 starts being thermally decomposed.

The volume reduction processing part 20 has a body part 21 which is installed so as to cover the upstream side of the transport part 10 and accommodates the composite material 200, and an exhaust gas processing part 22. An exhaust gas (heat medium) Eg generated by combusting fuel is introduced into the main body 21 from the internal combustion engine 3 via a duct 4. The temperature of the exhaust gas Eg indicated by arrows in Fig. 1 is within a predetermined temperature range that is greater than or equal to 300 degrees Celsius and less than or equal to 400 degrees Celsius. The volume reduction processing part 20 heats the composite material 200 by exhaust heat generated from the internal combustion engine 3.

The volume reduction processing part 20 heats the composite material 200 within a predetermined temperature range by the exhaust gas Eg supplied from the duct 4 to thermally decompose a resin material contained in the composite material 200. The volume reduction processing part 20 heats the composite material 200 for a predetermined time so that at least a portion of a predetermined weight ratio of the composite material 200 is thermally decomposed in a state where transportation of the composite material 200 by the transport part 10 is stopped. As illustrated in Fig. 2, the composite material 200 whose volume is reduced by thermal decomposition in the volume reduction processing part 20 is transported in the transport direction TD by the transport part 10 and supplied to the collection part 30.

As illustrated in Fig. 1, the composite material 200 is formed in a cylindrical shape extending in the longitudinal direction (the transport direction TD in Fig. 1). The volume reduction processing part 20 causes the exhaust gas Eg guided from the duct 4 to flow through toward an internal space of the cylindrical composite material 200 as the heat medium in a predetermined temperature range.

As illustrated in Fig. 1, the exhaust gas Eg passing through the internal space of the composite material 200 is released into the atmosphere through the exhaust gas processing part 22. The exhaust gas processing part 22 is a device that removes atmospheric pollutants such as nitrogen oxides and sulfur oxides contained in the exhaust gas Eg.

The collection part 30 is a device that collects the composite material 200 transported by the transport part 10. The collection part 30 is arranged at the downstream end of the transport part 10 in the transport direction TD and collects the composite material 200 that falls downward from the downstream end.

Herein, a composite material volume reduction method for reducing the volume of the composite material 200 by using the volume reduction processing device 100 of the present embodiment will be described with reference to the drawings. Fig. 3 is a flowchart illustrating the composite material volume reduction method of the present embodiment.

In step S101 (moving step), the watercraft 1 rotates the screw 3a with the internal combustion engine 3 and moves to a location where the composite material 200 to be subjected to the volume reduction process is installed.

In step S102 (installation step), the composite material 200 is installed in the transport part 10 on upstream in the transport direction TD. For example, the composite material 200 being suspended by a crane (not illustrated) is transported to the transport part 10 and then installed in the transport part 10.

In step S103 (volume reduction step), the volume reduction processing part 20 heats the composite material 200 within a predetermined temperature range by the exhaust gas Eg supplied from the duct 4 to thermally decompose a resin material contained in the composite material 200. The volume reduction processing part 20 heats the composite material 200 for a predetermined time so that at least a portion of a predetermined weight ratio of the composite material 200 is thermally decomposed in a state where the transportation of the composite material 200 by the transport part 10 is stopped.

In step S104 (transport step), the transport part 10 transports the composite material 200 whose resin material has been thermally decomposed by the volume reduction processing part 20 toward the collection part 30.

In step S105 (collection step), the collection part 30 collects the composite material 200 that falls downward from the downstream end of the transport part 10 in the transport direction TD.

According to the watercraft 1 of the present embodiment described above reduces the volume of the composite material 200 by heating the composite material 200 within a predetermined temperature range to thermally decompose the resin material by the volume reduction processing part 20. Since the volume reduction rate of the composite material 200 by thermal decomposition is sufficiently higher than the volume reduction rate of the composite material 200 by cutting, it is possible to sufficiently reduce the volume of the composite material 200 without installing a facility that further cuts the cut composite materials 200 into smaller pieces or a facility that crushes the cut composite materials 200. Further, since the body 2 in which the volume reduction processing part 20 is installed can be moved by the internal combustion engine 3 to the location where the composite material 200 is installed, even when the composite material 200 is large, it is possible to prevent an increase in the cost due to transportation of the composite material 200 to the volume reduction processing facilities.

Further, according to the watercraft 1 of the present embodiment, since the thermally decomposed composite material 200 is transported by the transport part 10 and then collected in the collection part 30, the volume reduction process on the composite material 200 and the collection process on the composite material 200 whose volume has been reduced can be automated without requiring any work by the operator.

Further, according to the watercraft 1 of the present embodiment, since the exhaust gas Eg within the predetermined temperature range flows through the internal space of the composite material 200 formed in a cylindrical shape extending in the longitudinal direction, the overall composite material 200 can be thermally decomposed efficiently and reliably.

### [Second Embodiment]

Next, a watercraft 1A according to the second embodiment of the present disclosure will be described with reference to the drawings. The present embodiment is a modified example for the first embodiment and is the same as the first embodiment except when specifically described below, and the description thereof will be omitted below.

In the watercraft 1 of the first embodiment, the exhaust heat of the exhaust gas Eg discharged from the internal combustion engine 3 is used as a heat source for thermally decomposing the composite material 200 by the volume reduction processing part 20. In contrast, in the watercraft 1A of the present embodiment, heat generated from a thermal decomposition furnace 50 is used together with the exhaust gas Eg as a heat source for the volume reduction processing part 20 to thermally decompose the composite material 200.

As illustrated in Fig. 4, a volume reduction processing device 100A of the watercraft 1A of the present embodiment includes a crushing part 40 that crushes the composite material 200 thermally decomposed by the volume reduction processing part 20 and the thermal decomposition furnace 50 that thermally decomposes the composite material 200 crushed by the crushing part 40.

The crushing part 40 is a device that crushes the composite material 200 transported by the transport part 10 into a size less than a predetermined size. As illustrated in Fig. 4, the crushing part 40 has a pair of gripping rollers 41 that rotate in the opposite direction to each other and a pair of crushing rollers 42 that rotate in the opposite direction to each other. The pair of gripping rollers 41 are rollers that rotate while gripping the composite material 200 transported by the transport part 10 and push the composite material 200 into the pair of crushing rollers 42.

The pair of crushing rollers 42 form a device that crushes the composite material 200 pressed by the pair of gripping rollers 41. The pair of crushing rollers 42 have a plurality of claws (not illustrated) provided on the outer circumference surface and crush the composite material 200 by collapsing the composite material 200 with the plurality of claws. The composite material 200 crushed by the pair of crushing rollers 42 is crushed into a size whose average value is less than or equal to 50 mm square, for example.

The thermal decomposition furnace 50 is a device that thermally decomposes a resin material that has not been thermally decomposed by the volume reduction processing part 20. The thermal decomposition furnace 50 further reduces the volume of the composite material 200 by heating the composite material 200 within a predetermined temperature range to thermally decompose the resin material contained in the composite material 200. Herein, the predetermined temperature range is greater than or equal to 300 degrees Celsius and less than or equal to 400 degrees Celsius and is a temperature range that is greater than or equal to the minimum temperature at which the resin material contained in the composite material 200 starts being thermally decomposed.

Any heat source used for heating the composite material 200 in the thermal decomposition furnace 50 can be used. The exhaust gas Eg discharged from the internal combustion engine 3 can be used, for example. Further, heat for heating the composite material 200 may be generated by a combustion device (not illustrated) for burning the composite material.

An exhaust gas EgA generated in heating the composite material 200 in the thermal decomposition furnace 50 is guided into the volume reduction processing part 20 via a duct 51. The temperature of the exhaust gas EgA is a temperature included in a temperature range that is greater than or equal to 300 degrees Celsius and less than or equal to 400 degrees Celsius, for example. The volume reduction processing part 20 heats and then thermally decomposes the composite material 200 by the heat of the exhaust gas EgA generated from the thermal decomposition furnace 50.

Although the composite material 200 crushed by the crushing part 40 is thermally decomposed in the thermal decomposition furnace 50, and the composite material 200 is thermally decomposed by volume reduction processing part 20 with the use of the heat of the exhaust gas EgA generated from the thermal decomposition furnace 50 in the above description, other forms may be employed. For example, an incinerator 60 may be provided instead of the thermal decomposition furnace 50.

The incinerator 60 is a device that incinerates the composite material 200 thermally decomposed by the volume reduction processing part 20. The incinerator 60 burns the composite material 200 by a combustion device (not illustrated). The exhaust gas EgA generated in incinerating the composite material 200 in the incinerator 60 is guided to the volume reduction processing part 20 via a duct 61. The temperature of the exhaust gas EgA is a temperature included in a temperature range that is greater than or equal to 300 degrees Celsius and less than or equal to 400 degrees Celsius, for example. When the temperature of the exhaust gas EgA generated from the incinerator 60 exceeds 400 degrees Celsius, the exhaust gas EgA is cooled to a temperature less than or equal to 400 degrees Celsius by a temperature reduction device (not illustrated) and then guided to the volume reduction processing part 20.

Although both of the exhaust gas Eg supplied from the internal combustion engine 3 and the exhaust gas EgA generated from the thermal decomposition furnace 50 or the incinerator 60 are used as the heat source for thermally decomposing the composite material 200 in the volume reduction processing part 20 in the above description, other forms may be employed. For example, as the heat source for thermally decomposing the composite material 200 in the volume reduction processing part 20, only the exhaust gas EgA generated from the thermal decomposition furnace 50 or the incinerator 60 may be used so that the exhaust gas Eg supplied from the internal combustion engine 3 is not used.

According to the watercraft 1 of the present embodiment described above, since the composite material 200 is thermally decomposed with the use of heat generated from the thermal decomposition furnace 50 that further thermally decomposes the composite material 200 thermally decomposed by the volume reduction processing part 20, the thermal efficiency of the entire watercraft 1A can be increased compared to the case where the heat used for thermally decomposing the composite material 200 is generated by other means. Further, since the composite material 200 is thermally decomposed with the use of heat generated from the incinerator 60 that incinerates the composite material 200 thermally decomposed by the volume reduction processing part 20, the thermal efficiency of the entire watercraft 1A can be increased compared to the case where heat used for thermally decomposing the composite material 200 is generated by other means.

### [Third Embodiment]

Next, a watercraft 1B according to the third embodiment of the present disclosure will be described with reference to the drawings. The present embodiment is a modified example for the first embodiment and is the same as the first embodiment except as specifically explained below, and the description thereof will be omitted below.

In the watercraft 1 of the first embodiment, the composite material 200 is transported by the belt 12 stretched around the transport rollers 11. In contrast, in the watercraft 1B of the present embodiment, the composite material 200 is directly transported by transport rollers 11B, and acquisition parts 13B are provided below the transport rollers.

As illustrated in Fig. 5, the volume reduction processing device 100B of the watercraft 1B of the present embodiment has a transport part 10B. The transport part 10B has a plurality of transport rollers 11B arranged apart from each other along the transport direction TD and a plurality of acquisition parts 13B provided below the transport rollers 11B. Each acquisition part 13B is a member that acquires a resin material of the composite material 200 that has been thermally decomposed by the volume reduction processing part 20.

The acquisition part 13B acquires a composite material 200 having a size smaller than the installation interval of the conveying roller 11B, and a resin material which is incinerated by thermal decomposition in the volume reduction processing part 20. When the acquired composite material 200 is filled in the acquisition part 13B, the operator conveys the composite material 200 acquired in the acquisition part 13B to the collection part 30. According to the ship 1B of the present embodiment, the thermally decomposed composite material 200 can be conveyed to the recovery section 30 by the conveying roller 11B, and the resin material dropped downward from the conveying roller 11B can be surely acquired by the acquisition section 13B.

The mobile body according to the above-described embodiment is understood as follows, for example. A moving body (1) according to the present disclosure comprises a volume reduction processing part (20) for reducing the volume of a composite material (200) formed of a resin material including a fiber base material, a box body (2) in which the volume reduction processing part is installed, and a thrust generating part (3) for generating thrust for transferring the box body, wherein the volume reduction processing part reduces the volume of the composite material by heating the composite material in a predetermined temperature range to thermally decompose the resin material.

According to the moving unit of the present disclosure, the volume reduction processing part reduces the volume of the composite material by heating the composite material within a predetermined temperature range to thermally decompose the resin material. Since the volume reduction rate of the composite material by thermal decomposition is sufficiently higher than the volume reduction rate of the composite material by cutting, it is possible to sufficiently reduce the volume of the composite material without installing a facility that further cuts the cut composite material into smaller pieces or a facility that crushes the cut composite material. Further, since the body in which the volume reduction processing part is installed can be moved by the thrust generation part to the location where the composite material is installed, even when the composite material is large, it is possible to prevent an increase in cost due to transportation of the composite material to the volume reduction processing facilities.

The mobile body according to the above-described embodiment is understood as follows, for example. A moving body (1) according to the present disclosure comprises a volume reduction processing part (20) for reducing the volume of a composite material (200) formed of a resin material including a fiber base material, a box body (2) in which the volume reduction processing part is installed, and a thrust generating part (3) for generating thrust for transferring the box body, wherein the volume reduction processing part reduces the volume of the composite material by heating the composite material in a predetermined temperature range to thermally decompose the resin material.

The moving unit according to the present disclosure may be configured such that the transport part has a plurality of transport rollers (11B) arranged apart from each other along a transport direction and an acquisition part (13B) provided below the transport roller and configured to acquire the resin material thermally decomposed by the volume reduction processing part.

According to the moving unit of the present configuration, the thermally decomposed composite material can be transported by the transport rollers toward the collection part, and the resin material falling downward from the transport rollers can be reliably acquired by the acquisition part.

The moving unit according to the present disclosure may be configured such that the composite material is formed in a cylindrical shape extending in a longitudinal direction, and the volume reduction processing part causes a heat medium within the predetermined temperature range to flow through toward an internal space of the composite material.

According to the moving unit of the present configuration, since a heat medium within a predetermined temperature range flows through the internal space of the composite material formed in a cylindrical shape extending in the longitudinal direction, the overall composite material can be thermally decomposed efficiently and reliably.

The moving unit according to the present disclosure may be configured such that the volume reduction processing part (20) heats the composite material by exhaust heat generated from the thrust generation part.

According to the moving unit of the present configuration, since the composite material is thermally decomposed with the use of exhaust heat generated from the thrust generation part, the thermal efficiency of the entire moving part can be increased compared to the case where the heat used for thermally decomposing the composite material is generated by other means.

The moving unit according to the present disclosure may be configured to include a thermal decomposition furnace (50) configured to heat the composite material thermally decomposed by the volume reduction processing part to thermally decompose the composite material, and the volume reduction processing part may be configured to heat the composite material by heat generated from the thermal decomposition furnace.

According to the moving unit of the present configuration, since the composite material is thermally decomposed with the use of the heat generated from the thermal decomposition furnace to further thermally decompose the composite material that has been thermally decomposed by the volume reduction processing part, the thermal efficiency of the entire moving unit can be increased compared to the case where the heat used for thermally decomposing the composite material is generated by other means.

The moving unit according to the present disclosure may be configured to include an incinerator (60) configured to burn the composite material thermally decomposed by the volume reduction processing part, and the volume reduction processing part may be configured to heat the composite material by heat generated from the incinerator.

According to the moving unit of the present configuration, since the composite material is thermally decomposed with the use of the heat generated from the incinerator that incinerates the composite material thermally decomposed by the volume reduction processing part, the thermal efficiency of the entire moving unit can be increased compared to the case where the heat used for thermally decomposing the composite material is generated by other means.

The moving unit according to the present disclosure may be configured such that the predetermined temperature range is greater than or equal to 300 degrees Celsius and less than or equal to 400 degrees Celsius.

According to the moving unit of the present configuration, by heating the composite material within a temperature range that is greater than or equal to 300 degrees Celsius and less than or equal to 400 degrees Celsius into a state where the composite material is thermally decomposed without being burned, it is possible to suitably reduce the volume of the composite material without causing any disadvantage such as generation of a harmful gas due to burning of the composite material.

### [Reference Signs List]

- 1, 1A, 1B: watercraft (moving unit)
- 2: body
- 3: internal combustion engine (thrust generation part)
- 10, 10B: transport part
- 11, 11B: transport roller
- 13B: acquisition part
- 20: volume reduction processing part
- 30: collection part
- 40: crushing part
- 50: thermal decomposition furnace
- 51: duct
- 60: incinerator
- 61: duct
- 100, 100A, 100B: volume reduction processing device
- 200: composite material
- Eg, EgA: exhaust gas
- T: transport direction

## Claims

1. A moving unit comprising:
a volume reduction processing part for reducing the volume of a composite material formed of a resin material including a fiber base material;
a box body in which the volume reduction processing part is installed; and
a thrust generation part for generating thrust for moving the box body, **characterized in that**
the volume reduction processing partis configured to reduce the volume of the composite material by heating the composite material within a predetermined temperature range to thermally decompose the resin material.

2. The moving unit according to claim 1 further comprising:
a transport part for transporting the composite material in which the resin material was thermally decomposed by the volume reduction processing part; and
a collection part for collecting the composite material transported by the transport part.

3. The moving unit according to claim 2, wherein the transport part has
a plurality of transport rollers arranged apart from each other along a transport direction and
an acquisition part for acquiring the resin material thermally decomposed by the volume reduction processing part, the acquisition part being provided below the transport rollers.

4. The moving unit according to any one of claims 1 to 3,
wherein the composite material is formed in a cylindrical shape extending in a longitudinal direction, and
wherein the volume reduction processing part is configured to cause a heat medium within the predetermined temperature range to flow through toward an internal space of the composite material.

5. The moving unit according to any one of claims 1 to 4, wherein the volume reduction processing part is configured to heat the composite material by exhaust heat generated from the thrust generation part.

6. The moving unit according to any one of claims 1 to 4 further comprising a thermal decomposition furnace for heating the composite material thermally decomposed by the volume reduction processing part to thermally decompose the composite material,
wherein the volume reduction processing part is configured to heat the composite material by heat generated from the thermal decomposition furnace.

7. The moving unit according to any one of claims 1 to 4 further comprising an incinerator for burning the composite material thermally decomposed by the volume reduction processing part,
wherein the volume reduction processing part is configured to heat the composite material by heat generated from the incinerator.

8. The moving unit according to any one of claims 1 to 7, wherein the predetermined temperature range is greater than or equal to 300 degrees Celsius and less than or equal to 400 degrees Celsius.
